# FASCICULE DE BREVET EUROPEEN

(11) **EP 4 377 101 B1**
(45) Date de publication et mention de la délivrance du brevet: **05.11.2025**
(21) Numéro de dépôt: 22751774.5
(22) Date de dépôt: 06.07.2022
(51) Int. Cl.: B60C 9/18, B60C 9/06, B60C 9/04

(54) **PNEUMATIQUE POUR MOTOCYLCETTE A HAUTE VITESSE LIMITE**
REIFEN FÜR EIN MOTORRAD MIT HOHER KOPFGESCHWINDIGKEIT
TYRE FOR A MOTORCYCLE HAVING A HIGH TOP SPEED

(30) Priorité: 26.07.2021 FR 2108058
(43) Date de publication de la demande: 05.06.2024
(73) Titulaire: COMPAGNIE GENERALE DES ETABLISSEMENTS MICHELIN, 63000 Clermont-Ferrand (FR)
(72) Inventeur: VILCOT, Florian, 63040 CLERMONT-FERRAND Cedex 9 (FR)
(74) Mandataire: M.F.P. Michelin
(86) Numéro de dépôt international: PCT/FR2022/051352
(87) Numéro de publication internationale: WO 2023/007071

(56) Documents cités:
- DE-T2- 60 020 498
- FR-A1- 3 102 095
- FR-A1- 3 102 097

## Description

La présente invention est relative à un pneumatique pour motocyclette.

On connait de l'état de la technique un pneumatique pour un usage de navettage (en anglais, on parle d'un usage « commuting » ou « commuter »). Cette appellation est donnée car, bien que l'usage du pneumatique ne soit pas limité aux déplacements de navettage, cet usage représente la majorité des usages de ce pneumatique. Ce pneumatique est également utilisable pour des motocyclettes de type « cruiser » ou « custom ».

Un tel pneumatique présente des dimensions et des caractéristiques adaptées à la motocyclette correspondant à l'usage ou au type de motocyclette précédemment décrits. De telles dimensions adaptées à l'usage de navettage ou aux motocyclettes de type de type « cruiser » ou « custom » comprennent un rapport nominal d'aspect H/S, exprimé en pourcentage, est au moins égal à 40 et au plus égal à 100, une largeur de section nominale ou grosseur boudin S au moins égale à 50 mm et au plus égal à 240 mm, un diamètre au crochet nominal au moins égal à 10 pouces et au plus égal à 21 pouces.

En outre, pour un tel usage, le pneumatique présente un indice de vitesse inférieur ou égal à V, indice de vitesse qui correspond, selon la section « General Information » du Standard Manual de la European Tyre and Rim Technical Organisation ou « ETRTO », 2021, à une vitesse limite égale à 240 km/h. En effet, pour un tel usage, les vitesses sont relativement modérées. Néanmoins, il est nécessaire d'avoir une vitesse limite atteignable par le pneumatique suffisamment élevée et donc indice de vitesse suffisant pour garantir la sécurité des usagers du pneumatique, notamment lors de l'utilisation ponctuelle du pneumatique à des vitesses plus élevées (sans que celles-ci ne soient bien sur supérieures à l'indice de vitesse du pneumatique).

Ces pneumatiques sont du type diagonaux à ceinture (en anglais « bias belted ») ou diagonaux (en anglais « bias »). Ces types de pneumatique sont connus notamment du Standard Manual de l'ETRTO », 2021.

Un pneumatique de type diagonal à ceinture comprend un sommet, deux flancs, deux bourrelets, chaque flanc reliant chaque bourrelet au sommet. Le pneumatique comprend également une armature de carcasse ancrée dans chaque bourrelet et s'étendant dans chaque flanc et radialement intérieurement au sommet. L'armature de carcasse comprend une couche de carcasse comprenant des éléments de renfort filaires formant, avec la direction circonférentielle, un angle égal à +29°. L'armature de carcasse comprend une couche de carcasse radialement extérieure comprenant des éléments de renfort filaires formant, avec la direction circonférentielle, un angle égal à -29°. Les angles de chacune des couches de carcasse sont, en valeur absolue, égaux mais présentent des orientations opposées. Le sommet comprend une armature de sommet comprenant une ou plusieurs couches de sommet agencées radialement à l'extérieur de l'armature de carcasse. Dans le cas où l'armature de sommet comprend deux couches de sommet, l'armature de sommet comprend une couche de sommet radialement intérieure comprenant des éléments de renfort filaires formant, avec la direction circonférentielle, un angle égal à +29°. L'armature de sommet comprend une couche de sommet radialement extérieure comprenant des éléments de renfort filaires formant, avec la direction circonférentielle, un angle égal à -29°. Les angles de chacune des couches de sommet sont, en valeur absolue, égaux mais présentent des orientations opposées.

A la différence des pneumatiques de type diagonal à ceinture, un pneumatique de type diagonal ne comprend pas d'armature de sommet.

Les pneumatiques de types diagonal et diagonal à ceinture présentent des indices de vitesse choisis parmi H, S, V, R, Q et P.

Bien que peu coûteux en raison d'un procédé de fabrication très simple et de matériaux peu onéreux, le pneumatique de type diagonal présente toutefois des défauts parmi lesquels, sa masse ainsi que sa faible capacité à conserver la dimension radiale attendue, que ce soit lors de l'application de la pression de gonflage qui déforme radialement le pneumatique ou que ce soit lors d'un roulage à haute vitesse qui déforme également radialement le pneumatique en raison de la force centrifuge.

Le pneumatique de type diagonal à ceinture, s'il présente une capacité supérieure à conserver la dimension radiale attendue présente néanmoins une masse encore plus importante qu'un pneumatique de type diagonal.

De leur côté, FR 3 102 097 A1 et FR 3 102 095 A1 divulguent chacun un pneumatique comprenant une armature de carcasse, ainsi que, au sommet du pneumatique, une armature de sommet incluant à la fois une armature de travail et une armature de frettage. Quant à DE 600 20 498 T2, il divulgue un pneumatique de type diagonal, dont l'armature de carcasse inclut deux nappes croisées.

L'invention a pour but de proposer un pneumatique présentant une masse réduite, une capacité équivalente à conserver la dimension radiale attendue par rapport à des pneumatiques de type diagonal à ceinture et de type diagonal décrits ci-dessus mais sans que cela ne réduise la vitesse limite atteignable par le pneumatique.

A cet effet, l'invention a pour objet un pneumatique pour motocyclette présentant un indice de vitesse inférieur ou égal à V et comprenant un sommet, des premier et deuxième flancs, des premier et deuxième bourrelets, chaque premier et deuxième flanc reliant respectivement chaque premier et un deuxième bourrelet au sommet, le pneumatique comprenant une armature de carcasse ancrée dans chaque premier et un deuxième bourrelet et s'étendant radialement dans chaque premier et deuxième flanc et axialement dans le sommet, l'armature de carcasse comprenant une unique couche de carcasse, le sommet comprenant :
- une bande de roulement destinée à venir en contact avec un sol lors du roulage du pneumatique,
- une armature de sommet agencée radialement entre la bande de roulement et l'armature de carcasse, l'armature de sommet comprenant une unique couche de sommet,

la couche de sommet est délimitée axialement par des premier et deuxième bords axiaux de la couche de sommet et comprend des éléments de renfort filaires de sommet s'étendant axialement du premier bord axial au deuxième bord axial de la couche de sommet les uns sensiblement parallèlement aux autres selon une direction principale de chaque élément de renfort filaire de sommet formant, avec la direction circonférentielle du pneumatique, un angle AT,
la couche de carcasse est délimitée axialement par des premier et deuxième bords axiaux de la couche de carcasse et comprend des éléments de renfort filaires de carcasse s'étendant axialement du premier bord axial au deuxième bord axial de la couche de carcasse, chaque élément de renfort filaire de carcasse s'étendant selon une direction principale de chaque élément de renfort filaire de carcasse, formant, avec la direction circonférentielle du pneumatique, un angle ACS, dans une portion de la couche de carcasse s'étendant axialement à l'aplomb radial de la couche de sommet,
l'angle AT et l'angle ACS étant d'orientations opposées et tels que ||AT|-|ACS|| ≤ 5°.

Les pneumatiques de l'invention sont destinés à des motocyclettes tels que définis au sens de la norme de la European Tyre and Rim Technical Organisation ou « ETRTO », 2021. Un tel pneumatique présente une section dans un plan de coupe méridien caractérisée par une hauteur de section H, une largeur de section nominale ou grosseur boudin S, une largeur hors tout du pneumatique SG, au sens de la norme de la European Tyre and Rim Technical Organisation ou « ETRTO », 2021.

Conformément à l'invention, le pneumatique selon l'invention présente un indice de vitesse défini selon la section « General Information » du Standard Manual de la European Tyre and Rim Technical Organisation ou « ETRTO », 2021. Un indice de vitesse égal à V correspond à une vitesse limite égale à 240 km/h. Cet indice de vitesse est présent sur le marquage présent du le flanc du pneumatique. En effet, un pneumatique présente, généralement sur au moins un des flancs, un marquage conforme au marquage du manuel de la norme ETRTO 2021 indiquant la dimension du pneumatique sous la forme W/M α K U β avec W désignant la largeur de section nominale, M désignant le rapport d'aspect nominal, α désignant la structure, K désignant le diamètre de jante nominale, U désignant l'indice de charge et β désignant l'indice de vitesse.

Par indice inférieur ou égal à V, on entend que le pneumatique présente un indice de vitesse correspondant à une vitesse maximale inférieure ou égale à la vitesse maximale correspondant à l'indice de vitesse V qui est égale à 240 km/h. De tels indices sont choisis préférentiellement parmi les indices P, Q, R, S,T, U, H et V.

Conformément à l'invention, l'armature de sommet comprend une unique couche de sommet. Ainsi, l'armature de sommet est, à l'exception de la couche de sommet, dépourvue de toute couche renforcée par des éléments de renfort filaires. Les éléments de renfort filaires de telles couches renforcées exclues de l'armature de sommet du pneumatique comprennent les éléments de renfort filaires métalliques et les éléments de renfort filaires textiles. De façon très préférentielle, l'armature de sommet est constituée par l'unique couche de sommet.

Conformément à l'invention, l'armature de carcasse comprend une unique couche de carcasse. Ainsi, l'armature de carcasse est, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

Le pneumatique selon l'invention présente une masse réduite par rapport aux pneumatiques de type diagonal à ceinture et de type diagonal en raison d'un nombre moindre de couches de l'armature de carcasse (par rapport à un pneumatique de type diagonal) et des armatures de carcasse et de sommet (par rapport à un pneumatique de type diagonal à ceinture).

Le pneumatique selon l'invention présente également une excellente capacité à conserver sa dimension radiale attendue que ce soit lors de l'application de la pression de gonflage qui déforme radialement le pneumatique ou que ce soit lors d'un roulage à haute vitesse. En effet, en raison de l'indice de vitesse inférieur ou égal à V qui correspond à une vitesse maximale égale à 240 km/h et qui, est relativement modérée, le pneumatique selon l'invention présente la même capacité à conserver sa dimension radiale attendue par rapport à un pneumatique de type diagonal à ceinture dans lequel la présence de deux couches de sommet peut être finalement considérée comme superflue pour des vitesses relativement modérées. Par rapport à un pneumatique de type diagonal, le pneumatique selon l'invention présente une capacité améliorée à conserver sa dimension radiale attendue grâce à la présence de l'unique couche de sommet.

De façon surprenante, l'invention permet d'obtenir un pneumatique avec la même vitesse limite atteignable que celles des pneumatiques de l'état de la technique. En effet, même si le pneumatique selon l'invention présente un nombre moindre de couches et donc, a priori, une résistance mécanique moindre, le pneumatique selon l'invention présente une vitesse limite égale voire améliorée. Les inventeurs ont découvert que la dégradation à haute vitesse des pneumatiques de l'état de la technique n'était pas causée par une résistance mécanique insuffisante de la structure des pneumatiques de l'état de la technique mais par un échauffement important de cette structure, notamment à haute vitesse, conduisant dans un premier temps, à une fragilisation thermique de la structure, puis dans un deuxième temps, à sa destruction. Ainsi, contrairement à la démarche naturelle qui aurait consisté à renforcer la structure du pneumatique, les inventeurs à l'origine de l'invention ont eu l'idée de réduire l'échauffement de la structure pour éviter sa fragilisation thermique et donc sa destruction qui en découle. Ainsi, en réduisant le nombre de couches dans les flancs (par rapport à un pneumatique de type diagonal) et dans les flancs et dans le sommet (par rapport à un pneumatique de type diagonal à ceinture), on réduit l'échauffement du pneumatique dû à l'hystérèse des flancs et/ou du sommet lorsque le pneumatique roule, notamment à haute vitesse.

Indépendamment du fait que les angles AT et ACS soient constants ou non sur l'ensemble de la portion du pneumatique comprise axialement entre les bords axiaux de la couche de sommet, les angles AT et ACS sont d'orientations opposées sur l'ensemble de la portion du pneumatique comprise axialement entre les bords axiaux de la couche de sommet.

Le fait que les angles AT et ACS soient sensiblement égaux, c'est-à-dire que ||AT|-|ACS|| ≤ 5°, permet de fabriquer le pneumatique selon un procédé relativement simple analogue au procédé de fabrication des pneumatiques de type diagonaux. En effet, grâce aux angles AT et ACS sensiblement égaux, il est possible de poser un ensemble de carcasse et un ensemble de sommet dans lesquels les éléments de renfort filaires de carcasse et les éléments de renfort filaires de sommet forment des angles sensiblement égaux en valeur absolue avec la direction circonférentielle du support de fabrication et d'obtenir, en fonction du taux de conformation, la valeur des angles AT et ACS désirés. Chaque ensemble de carcasse et ensemble de sommet est respectivement destiné à former l'unique couche de carcasse et l'unique couche de sommet.

La caractéristique ||AT|-|ACS|| ≤ 5° se constate pour une distance axiale par rapport au plan médian donnée. Ainsi, on mesurera les couples d'angles AT et ACS en des points situés, dans un plan de coupe méridien, à une même distance axiale du plan médian M du pneumatique.

On notera enfin que le pneumatique selon l'invention présente un confort amélioré par rapport au pneumatique de type diagonal ou au pneumatique de type diagonal à ceinture. Les inventeurs expliquent cela par le fait que, dans les pneumatiques de l'état de la technique, le cisaillement entre les deux couches de carcasse est relativement important et engendre une rigidité verticale relativement élevée. Au contraire, le pneumatique selon l'invention ne comprend qu'une unique couche de carcasse ce qui supprime le cisaillement et donc réduit significativement la rigidité verticale.

Le pneumatique selon l'invention est un pneumatique pour motocyclette. De tels pneumatiques sont préférentiellement caractérisés par un taux de courbure allant de 0,15 à 0,50, de préférence allant de 0,20 à 0,40. Un pneumatique pour motocyclette, à la différence d'un pneumatique pour véhicule pour automobile de tourisme, présente une bande de roulement très cintrée, ayant une courbure marquée distinctive. En particulier, cette courbure est caractérisée par la valeur du taux de courbure H' / SG, où H' représente la hauteur radiale de la bande de roulement par rapport au plan circonférentiel équatorial E passant par les extrémités radialement extérieures de ladite bande de roulement, et SG représente la largeur hors tout du pneumatique, c'est-à-dire la largeur axiale mesurée à l'équateur sur un pneumatique non chargé monté sur une jante de mesure et gonflé à sa pression nominale.

Avantageusement, les pneumatiques visés par l'invention sont tels que le rapport nominal d'aspect H/S, exprimé en pourcentage, est au moins égal à 40, de préférence au moins égal à 65 et est au plus égal à 100, de préférence au plus égal à 80, et la largeur de section nominale ou grosseur boudin S est au moins égale à 50 mm, de préférence au moins égale à 90 mm et plus préférentiellement au moins égale à 100 mm et au plus égal à 240 mm, de préférence au plus égal à 180 mm, plus préférentiellement au plus égal à 150 mm. En outre le diamètre au crochet nominal D, définissant le diamètre de la jante de montage du pneumatique, est au moins égal à 10 pouces, de préférence au moins égal à 13 pouces et au plus égal à 21 pouces, de préférence au plus égal à 16 pouces.

Par direction axiale, on entend la direction sensiblement parallèle à l'axe principal du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridienne, le plan passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et passant par les points axialement les plus extérieurs du pneumatique lorsque le pneumatique non chargé est monté sur une jante de mesure et gonflé à sa pression nominale.

La hauteur H du pneumatique est la distance radiale entre le point radialement le plus externe de la bande de roulement destiné à être au contact avec le sol et le point radialement le plus interne du pneumatique destiné à être en contact avec un support, par exemple une jante, lorsque le pneumatique non chargé est monté sur une jante de mesure et gonflé à sa pression nominale.

Par plan méridien, on entend un plan parallèle à et contenant l'axe de rotation du pneumatique et perpendiculaire à la direction circonférentielle.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Par direction principale selon laquelle un élément de renfort filaire s'étend, on comprend la direction selon laquelle l'élément de renfort filaire s'étend selon sa plus grande longueur. La direction principale selon laquelle un élément de renfort filaire s'étend peut être rectiligne ou courbe, l'élément de renfort pouvant décrire le long de sa direction principale une trajectoire rectiligne ou bien ondulée.

Par portion de l'assemblage, d'une couche ou du pneumatique comprise axialement entre les bords axiaux d'un ensemble enroulé ou d'une couche ou d'une armature, on comprend une portion de l'assemblage, de la couche ou du pneumatique s'étendant axialement et comprise entre les plans radiaux passant par les bords axiaux de l'ensemble enroulé ou de la couche ou de l'armature.

Par portion d'un ensemble enroulé destinée à s'étendre axialement, portion d'un ensemble enroulé s'étendant axialement ou portion d'une couche s'étendant axialement à l'aplomb radial d'un ensemble de référence ou d'une couche de référence, on comprend une portion dudit ensemble ou de ladite couche comprise entre les projections radiale des bords axiaux de l'ensemble de référence ou de la couche de référence sur ledit ensemble ou ladite couche.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Concernant chaque élément de renfort filaire, dans le pneumatique, l'angle considéré est l'angle, en valeur absolue, le plus petit des deux angles définis entre la droite de référence, ici la direction circonférentielle du pneumatique, et la direction principale selon laquelle l'élément de renfort filaire considéré s'étend.

Concernant chaque élément de renfort filaire, dans le pneumatique et lors du procédé, par orientation d'un angle, on entend le sens, horaire ou anti-horaire, dans lequel il faut tourner depuis la droite de référence, ici la direction circonférentielle du support, de l'assemblage ou du pneumatique, définissant l'angle pour atteindre la direction principale selon laquelle l'élément de renfort filaire considéré s'étend.

Concernant chaque élément de renfort filaire, lors du procédé, les angles considérés formés par les directions principales selon lesquelles s'étendent les éléments de renfort filaires de sommet et de carcasse sont par convention des angles d'orientations opposées et l'angle formé par la direction principale selon laquelle s'étend chaque élément de renfort filaire de sommet est, en valeur absolue, le plus petit des deux angles définis entre la droite de référence, ici la direction circonférentielle du support, de l'assemblage ou du pneumatique et la direction principale selon laquelle l'élément de renfort filaire de sommet s'étend. Ainsi, l'angle formé par la direction principale selon laquelle s'étend chaque élément de renfort filaire de sommet définit une orientation qui est opposée à celle formée par l'angle de la direction principale selon laquelle s'étend chaque élément de renfort filaire de carcasse.

Dans le pneumatique selon l'invention, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une couche d'un matériau polymérique, de préférence élastomérique ou bien constituée d'un empilement de plusieurs couches, chaque couche étant constituée d'un matériau polymérique, de préférence élastomérique.

Dans un mode de réalisation très préférentiel, le sommet comprend une unique armature de sommet. Ainsi, le sommet est, à l'exception, de l'armature de sommet, dépourvue de toute armature renforcée par des éléments de renfort filaires. Les éléments de renfort filaires de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement.

Par directement radialement au contact, on comprend que les objets considérés directement radialement au contact l'un de l'autre, ici les armatures et la bande de roulement, ne sont séparés radialement par aucun objet, par exemple par aucune couche, armature ni bande qui serait interposé radialement entre les objets considérés directement radialement au contact l'un de l'autre.

Dans des modes de réalisation dans lesquels la direction principale de chaque élément de renfort filaire de carcasse présente des zones de transition où l'angle est sensiblement variable, la portion de la couche de carcasse s'étendant axialement à l'aplomb radial de la couche de sommet et dont on caractérise l'angle ACS présente une largeur curviligne selon la direction axiale égale à au moins 30%, de préférence au moins 40% de la largeur curviligne selon la direction axiale de la couche de sommet.

Dans des modes de réalisation dans lesquels la direction principale de chaque élément de renfort filaire de carcasse présente des zones de transition où l'angle est sensiblement variable, la portion de la couche de carcasse s'étendant axialement à l'aplomb radial de la couche de sommet et dont on caractérise l'angle ACS présente une largeur curviligne selon la direction axiale égale à au plus 90%, de préférence au plus 80% de la largeur curviligne selon la direction axiale de la couche de sommet.

De préférence, le plan médian du pneumatique coupe cette portion de la couche de carcasse s'étendant axialement à l'aplomb de la couche de sommet. Plus préférentiellement, cette portion de la couche de carcasse s'étendant axialement à l'aplomb radial de la couche de sommet est centrée axialement sur le plan médian du pneumatique.

Par largeur curviligne selon la direction axiale on entend la largeur mesurée dans un plan de coupe méridien entre les deux bords axiaux de la couche correspondante en suivant la courbure de ladite couche, par exemple en suivant une ligne courbe passant au milieu de l'épaisseur radiale de ladite couche. Cette largeur est dite curviligne par opposition à la largeur droite qui elle serait mesurée entre les deux bords axiaux de la couche parallèlement à l'axe de rotation du pneumatique entre les deux bords axiaux.

Dans un mode de réalisation relatif à des indices de vitesse relativement élevés, l'indice de vitesse est choisi parmi les indices V, H, U, T, S.

Dans un mode de réalisation relatif à des indices de vitesse relativement faibles, l'indice de vitesse est choisi parmi les indices S, R, Q, P.

Dans des modes de réalisation optionnels et avantageux, chaque angle AT et ACS va, en valeur absolue de 20° à 65°, de préférence de 26° à 55° et encore plus préférentiellement de 26° à 45°. Ainsi, contrairement à un pneumatique dans lequel les angles AT et/ou ACS seraient, en valeur absolue, plus faibles, et dans lequel le sommet présenterait une rigidité de flexion sur champ et une rigidité de torsion élevées, le pneumatique de ces modes de réalisation présente un sommet relativement souple en raison d'angles AT et ACS relativement grands. Ainsi, contrairement à un sommet rigide pour lequel, lors d'une excitation, par exemple lors d'une prise de virage, on observerait des vibrations élevées du pneumatique, le pneumatique de ces modes de réalisation permet d'amortir les vibrations grâce à la souplesse de son sommet.

Dans des modes de réalisation définissant un mode d'ancrage de la couche de carcasse dans chaque bourrelet du pneumatique, chaque premier et deuxième bourrelet comprenant respectivement un premier et un deuxième élément de renfort circonférentiel, la couche de carcasse comprend:
- une portion axialement intérieure s'étendant depuis un premier point de la couche de carcasse radialement le plus intérieur au premier élément de renfort circonférentiel jusqu'à un deuxième point de la couche de carcasse radialement le plus intérieur au deuxième élément de renfort circonférentiel, et
- des première et deuxième portion axialement extérieure, chaque première et deuxième portion axialement extérieure étant agencée axialement à l'extérieur de la portion axialement intérieure et s'étendant respectivement depuis chaque premier et deuxième point radialement les plus intérieurs à chaque premier et deuxième élément de renfort circonférentiel jusqu'à respectivement chaque premier et deuxième bords axial de la couche de carcasse,
la portion axialement intérieure et les première et deuxième portions axialement extérieures étant agencées de façon à former des premier et deuxième enroulement autour respectivement de chaque premier et deuxième élément de renfort circonférentiel.

D'autres modes d'ancrage de la couche de carcasse sont possibles, par exemple comme décrit dans US5702548.

Dans des modes de réalisation permettant d'obtenir optionnellement et avantageusement une rigidité latérale importante, notamment par rapport à des pneumatiques de type radial, la portion axialement intérieure et les première et deuxième portions axialement extérieures sont agencées de façon à former :
- une première zone de recouvrement de la couche de carcasse comprenant une partie de la portion axialement intérieure et la première portion axialement extérieure agencées axialement en regard l'une de l'autre, et
- une deuxième zone de recouvrement de la couche de carcasse comprenant une partie de la portion axialement intérieure et la deuxième portion axialement extérieure agencées axialement en regard l'une de l'autre, et
la direction principale de chaque élément de renfort filaire de carcasse, forme, avec la direction circonférentielle du pneumatique, dans chaque partie de la portion axialement intérieure et chaque première et deuxième portion axialement extérieure de chaque première et deuxième zone de recouvrement, un angle ACF1, en valeur absolue inférieur ou égal à 70°.

Le fait que l'angle ACF1 soit, en valeur absolue, inférieur ou égal à 70° permet de conférer au pneumatique une rigidité latérale relativement élevée par rapport à un pneumatique de type radial dont les angles ACF1 sont généralement supérieur ou égaux à 80°. Le pneumatique présente ainsi une rigidité de dérive significativement supérieure à celle d'un pneumatique de type radial.

Avantageusement, l'angle ACF1 est inférieur ou égal à 65°, de préférence inférieur ou égal à 60°.

Avantageusement, l'angle ACF1 est supérieur ou égal à 25°, de préférence supérieur ou égal à 30°.

En raison de procédé de fabrication usuellement utilisés, l'angle ACF1 de chaque partie de la portion axialement intérieure de chaque première et deuxième zone de recouvrement est d'orientation opposée à l'angle ACF1 respectivement de chaque première et deuxième portion axialement extérieure de chaque première et deuxième zone de recouvrement.

De façon optionnelle, la portion axialement intérieure comprend des première et deuxième portions intercalées respectivement entre :
- la partie de la portion axialement intérieure de chaque première et deuxième zone recouvrement, et
- la portion de la couche de carcasse s'étendant axialement à l'aplomb radial de la couche de sommet,
la direction principale de chaque élément de renfort filaire de carcasse, formant, avec la direction circonférentielle du pneumatique, dans chaque première et deuxième portion intercalée, un angle ACF2, en valeur absolue, supérieur ou égal à ACF1 et strictement supérieur à ACS, de préférence strictement supérieur à ACF1 et ACS.

Dans des modes de réalisation dans lesquels la direction principale de chaque élément de renfort filaire de carcasse présente des zones de transition où l'angle est sensiblement variable, chaque première et deuxième portion intercalée s'étendant radialement dans chaque flanc présente une hauteur curviligne selon la direction radiale égale à au moins 5%, de préférence au moins 15% et plus préférentiellement au moins 30% de la hauteur curviligne LR selon la direction radiale de chaque partie de la portion axialement interne de la couche de carcasse s'étendant depuis respectivement chaque première et deuxième extrémité axialement extérieure de la portion de la couche de carcasse s'étendant axialement à l'aplomb radial de la couche de sommet jusqu'à respectivement chaque première et deuxième extrémité radialement extérieure de chaque première et deuxième zone de recouvrement.

Dans des modes de réalisation dans lesquels la direction principale de chaque élément de renfort filaire de carcasse présente des zones de transition où l'angle est sensiblement variable, chaque première et deuxième portion intercalée s'étendant radialement dans chaque flanc présente une hauteur curviligne selon la direction radiale égale à au plus 90%, de préférence au plus 80% de la hauteur curviligne LR selon la direction radiale de chaque partie de la portion axialement interne de la couche de carcasse s'étendant depuis respectivement chaque première et deuxième extrémité axialement extérieure de la portion de la couche de carcasse s'étendant axialement à l'aplomb radial de la couche de sommet jusqu'à respectivement chaque première et deuxième extrémité radialement extérieure de chaque première et deuxième zone de recouvrement.

Par hauteur curviligne selon la direction radiale, on entend la hauteur mesurée dans un plan de coupe méridien en suivant la courbure de ladite couche, par exemple en suivant une ligne courbe passant au milieu de l'épaisseur radiale de ladite couche. Cette hauteur est dite curviligne par opposition à la hauteur droite qui elle serait mesurée entre les deux extrémités de la portion parallèlement à la direction radiale du pneumatique.

De façon avantageuse, l'angle ACF2 est, en valeur absolue, inférieur ou égal à 80°, de préférence va, en valeur absolue, de 35° à 70° et plus préférentiellement de 40° à 60°. Plus l'angle ACF2 est faible en valeur absolue plus la rigidité de flexion sur champ et la rigidité de torsion du flanc sont élevée. Dans la mesure où ces rigidités importantes sont compensées par une rigidité de flexion sur champ et une rigidité de torsion relativement faible du sommet, le pneumatique ne génère pas ou peu de vibrations.

Dans un premier mode de réalisation permettant d'optimiser la réduction de la masse du pneumatique en réduisant la longueur des première et deuxième portions axialement extérieures, chaque premier et deuxième bord axial de la couche de carcasse est situé radialement à l'intérieur de l'équateur du pneumatique et, de préférence, situé radialement à l'intérieur de l'équateur du pneumatique à une distance radiale de l'équateur supérieure ou égale à 50% de la distance radiale entre l'équateur et le point le plus radialement intérieur du pneumatique.

Dans un deuxième mode de réalisation permettant d'améliorer la rigidité de dérive par rapport au premier mode de réalisation de chaque premier et deuxième bord axial de la couche de carcasse, chaque premier et deuxième bord axial de la couche de carcasse est situé radialement sur ou à l'extérieur de l'équateur du pneumatique et de préférence situé radialement à l'extérieur de l'équateur du pneumatique à une distance radiale de l'équateur inférieure ou égale à 50% de la distance radiale entre l'équateur et le point le plus radialement extérieur du pneumatique.

Dans certaines variantes du deuxième mode de réalisation, on pourra envisager que chaque premier et deuxième bord axial de la couche de carcasse est situé radialement à l'extérieur de l'équateur du pneumatique et axialement à l'intérieur respectivement de chaque premier et deuxième bord axial de la couche de sommet.

De façon optionnelle et avantageuse, afin d'améliorer la performance au test réglementaire d'énergie de rupture ou « Breaking Energy Test» en anglais, le rapport de la résistance à la rupture de la couche de sommet sur la résistance à la rupture de la couche de carcasse est strictement supérieur à 1, de préférence va de 1,10 à 1,45 et plus préférentiellement de 1,25 à 1,35. Lorsqu'un pneumatique de type diagonal est soumis au test d'énergie de rupture, la couche de carcasse radialement extérieure est la couche qui rompt la première, d'une part car les éléments de renfort filaires de cette couche radialement extérieure sont soumis à des tensions significativement plus importantes que celles auxquelles sont soumis les éléments de renfort filaires de la couche de carcasse radialement intérieure, et ce en raison de sa position radialement extérieure et, d'autre part, en raison de la présence d'une épaisseur de matériau élastomérique entre les deux couches qui protège, au travers de son cisaillement lorsqu'il est soumis au test d'énergie à rupture, la couche de carcasse radialement intérieure. En d'autres termes, la couche de carcasse radialement extérieure est la couche fusible et, dans les pneumatiques de l'état de la technique, on n'exploite pas pleinement le potentiel de résistance de l'ensemble formée par les deux couches de carcasse radialement intérieure et extérieure.

En augmentant la résistance à rupture de la couche de sommet qui est la couche fusible, on repousse le moment où on rompt la couche de sommet. On profite ainsi de façon synergique de l'amélioration liée au fonctionnement homogène des couches de sommet et de carcasse et de l'amélioration liée au renforcement de la couche de sommet qui est la couche fusible. Le rapport optimal entre la résistance à la rupture de la couche de sommet sur la résistance à la rupture de la couche de carcasse dépend notamment des angles AT et ACS. Ainsi, plus on aura des angles AT et ACS grands, plus il sera préférable d'avoir un rapport élevé. Plus les angles AT et ACS seront petits, plus le rapport préféré sera petit. L'homme du métier saura, en fonction des angles AT et ACS qu'il aura choisi, déterminer le rapport optimal, si besoin par des essais successifs en faisant varier les résistances mécaniques de chacune des couches de sommet et de carcasse.

Afin de déterminer la résistance mécanique d'une couche exprimée en daN/mm, on mesure la force à rupture d'un élément de renfort filaire de la couche, par exemple selon la norme ASTM D 885/D 885M - 10a de 2014. Puis, on multiplie la force à rupture de l'élément de renfort filaire par la densité d'éléments de renfort filaires par unité de largeur de la nappe destinée à former la couche, ici par le nombre d'éléments de renfort filaires par mm de nappe destinée à former la couche, ce nombre étant déterminé selon une direction perpendiculaire à la direction selon laquelle les éléments de renfort filaires s'étendent dans la nappe destinée à former la couche. Les résistances mécaniques, et notamment les densités d'éléments de renfort filaires de chacune des couches de sommet et de carcasse sont mesurées avant l'étape de déformation sur chaque nappe destinée à former la couche correspondante ou bien de façon alternatives, sur les couches du pneumatique en tenant compte du taux de conformation de façon à déterminer chaque densité d'éléments de renfort filaires de chacune des couches de sommet et de carcasse avant l'étape de déformation. Enfin, concernant le rapport de la résistance à la rupture de la couche de sommet sur la résistance à la rupture de la couche de carcasse, peu importe qu'il soit déterminé en prenant les densités avant ou après l'étape de déformation car le rapport reste constant.

Dans des modes de réalisation préférés permettant d'obtenir un excellent compromis entre la résistance mécanique de la couche de sommet, notamment à la pression d'éclatement, le coût et la masse de la couche de sommet:
- la couche de sommet présente une résistance à la rupture supérieure ou égale à 1900 daN/dm, de préférence supérieure ou égale à 2300 daN/dm.
- la couche de sommet présente une résistance à la rupture inférieure ou égale à 2600 daN/dm.

Dans des modes de réalisation préférés permettant d'obtenir un excellent compromis entre la résistance mécanique de la couche de carcasse, notamment à la pression d'éclatement, le coût et la masse de la couche de carcasse:
- la couche de carcasse présente une résistance à la rupture supérieure ou égale à 1600 daN/mm, de préférence supérieure ou égale à 1800 daN/mm.
- la couche de carcasse présente une résistance à la rupture inférieure ou égale à 2300 daN/mm, de préférence inférieure ou égale à 2100 daN/mm.

Dans des modes de réalisation préférés permettant d'alléger le pneumatique, chaque élément de renfort filaire de sommet et de carcasse comprend un assemblage de plusieurs monofilaments élémentaires textiles.

Dans un mode de réalisation préféré, les éléments de renfort filaires de sommet et de carcasse sont identiques et, afin de différencier les résistances à la rupture de la couche de sommet et de la couche de carcasse, le rapport de la densité d'éléments de renfort filaires de sommet sur la densité d'éléments de renfort filaires de carcasse est strictement supérieur à 1, de préférence va de 1,10 à 1,45 et plus préférentiellement de 1,25 à 1,35.

Par monofilament élémentaire, on entend un filament monolithique réalisé dans un matériau donné et issu, par exemple du filage de ce matériau, par exemple par filage au fondu, filage en solution ou filage de gel. Les monofilaments élémentaires présentent typiquement des diamètres allant de 2 µm à 0,50 mm. Les monofilaments élémentaires sont assemblés sous la forme de brins comprenant au moins 2 monofilaments élémentaires, typiquement plus de 10 monofilaments élémentaires, de préférence plus de 100 monofilaments élémentaires et plus préférentiellement plus de 200 monofilaments élémentaires. Par monofilament élémentaires textile, on entend un monofilament élémentaire non métallique.

L'invention ainsi que ses avantages seront aisément compris à la lumière de la description détaillée et des exemples de réalisation non limitatifs qui suivent, ainsi que des figures 1 à 16 relatives à ces exemples dans lesquels :
- la figure 1 est une vue en coupe dans un plan de coupe méridien d'un pneumatique selon un premier mode de réalisation de l'invention,
- la figure 2 est une vue schématique en arraché du pneumatique de la figure 1 illustrant l'agencement des éléments de renfort filaires des couches de sommet et de carcasse à l'aplomb radial de la couche de sommet,
- la figure 3 est une vue schématique des éléments de renfort filaires de carcasse agencés dans le flanc du pneumatique de la figure 1,
- les figures 4 à 12 illustrent les différentes étapes d'un procédé permettant de fabriquer le pneumatique de la figure 1, et
- la figure 13 est une vue analogue à celle de la figure 1 d'un pneumatique selon un deuxième mode de réalisation de l'invention.

Dans les figures relatives au pneumatique, on a représenté un repère X, Y, Z correspondant aux directions habituelles respectivement axiale (X), radiale (Y) et circonférentielle (Z) d'un pneumatique. Dans les figures relatives au procédé, on a représenté un repère x, y, z correspondant aux directions habituelles respectivement axiale (x), radiale (y) et circonférentielle (z) d'un support de fabrication présentant une forme sensiblement cylindrique autour d'un axe principal A. Ces directions respectivement axiale (x), radiale (y) et circonférentielle (z) sont également utilisées pour faire référence aux directions respectivement axiale (x), radiale (y) et circonférentielle (z) d'une ébauche crue et de l'assemblage présentant des formes sensiblement cylindriques et toriques autour d'un axe principal A'.

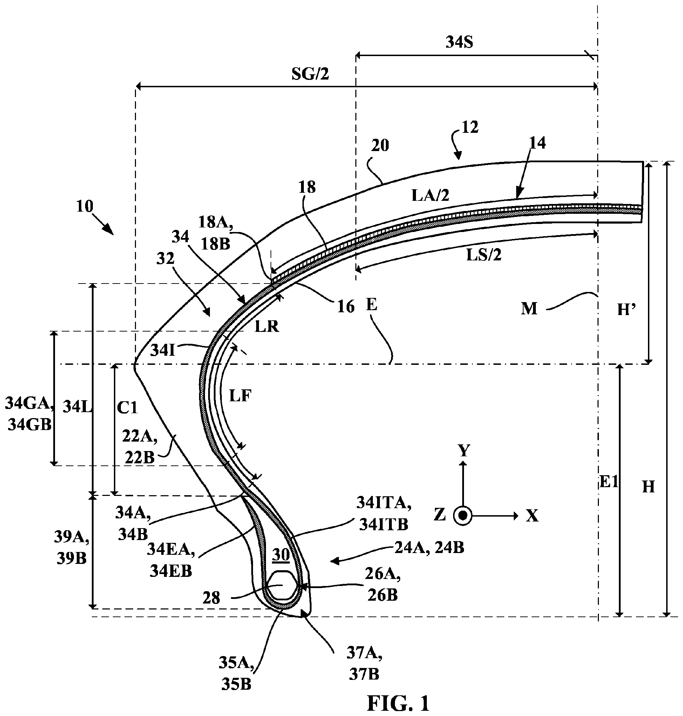

Dans la description qui suit, notamment sur la figure 1, on a illustré un demi-pneumatique sur lequel on a néanmoins mentionné les références relatives aux deux côtés du pneumatique à des fins de compréhension. Ainsi, par exemple, « le pneumatique comprend des premier et deuxième bourrelets 24A, 24B » signifie, par exemple que, le pneumatique comprend, d'un premier côté du plan médian, le premier bourrelet 24A et que, le pneumatique comprend, du deuxième côté du plan médian, le deuxième bourrelet 24B. Le lecteur saura déterminer les références concernées parmi lesquelles on trouve les références 18A, 18B, 24A, 24B, 26A, 26B, 34A, 34B, 34GA, 34GB, 34EA, 34EB, 34ITA, 34ITB, 35A, 35B, 37A, 37B, 39A, 39B

On a représenté sur la figure 1 un pneumatique, conforme à l'invention et désigné par la référence générale 10. Le pneumatique 10 est sensiblement de révolution autour d'un axe sensiblement parallèle à la direction axiale X. Le pneumatique 10 est ici destiné à une motocyclette pour un usage de navettage et présente des dimensions 150/70 - 14. Le pneumatique 10 présente un indice de vitesse choisi parmi les indices V, H, U, T, S et ici égal à S. Etant destiné à une motocyclette, le pneumatique est notamment caractérisé par un taux de courbure allant de 0,15 à 0,50, de préférence allant de 0,20 à 0,40 et ici égal à 0,33.

Le pneumatique 10 comprend un sommet 12 comprenant une bande de roulement 20 destinée à venir en contact avec un sol lors du roulage et une armature de sommet 14 s'étendant dans le sommet 12 selon la direction circonférentielle Z. Le pneumatique 10 comprend également une couche d'étanchéité 16 à un gaz de gonflage étant destinée à délimiter une cavité interne fermée avec un support de montage du pneumatique 10 une fois le pneumatique 10 monté sur le support de montage, par exemple une jante.

Le sommet 12 comprend une armature de sommet 14 comprenant une unique couche de sommet 18 et est, en l'espèce, constituée de l'unique couche de sommet 18. On parlera, par soucis de simplification de la couche de sommet 18 sans rappeler à chaque fois que cette couche est unique. L'armature de sommet 14 est surmontée radialement de la bande de roulement 20.

Le pneumatique 10 comprend des premier et deuxième flancs 22A, 22B prolongeant le sommet 12 radialement vers l'intérieur. Le pneumatique 10 comporte en outre des premier et deuxième bourrelets 24A, 24B radialement intérieurs respectivement aux premier et deuxième flancs 22A, 22B. Chaque premier et deuxième flanc 22A, 22B relie respectivement chaque premier et deuxième bourrelet 24A, 24B au sommet 12.

Chaque premier et deuxième bourrelet 24A, 24B comprend respectivement au moins un premier et deuxième élément de renfort circonférentiel 26A, 26B, en l'occurrence une tringle 28 surmontée radialement d'une masse de gomme 30 de bourrage.

Le pneumatique 10 comprend une armature 32 de carcasse ancrée dans chaque premier et deuxième bourrelet 24A, 24B. L'armature 32 de carcasse s'étend radialement dans chaque premier et deuxième flanc 22A, 22B et axialement dans le sommet 12. L'armature de sommet 14 est agencée radialement entre la bande de roulement 20 et l'armature de carcasse 32.

L'armature de carcasse 32 comprend une unique couche de carcasse 34 et en l'espèce, est constituée de l'unique couche de carcasse 34. On parlera, par soucis de simplification de la couche de carcasse 34 sans rappeler à chaque fois que cette couche est unique.

Chaque couche de sommet 18 et de carcasse 34 comprend une matrice élastomérique dans laquelle sont noyés un ou des éléments de renfort filaires de la couche correspondante. On va maintenant décrire ces couches en référence aux figures 1 à 3.

La couche de sommet 18 est délimitée axialement par des premier et deuxième bords axiaux 18A, 18B de la couche de sommet 18. La couche de sommet 18 comprend des éléments de renfort filaires de sommet 180 s'étendant axialement du premier bord axial 18A au deuxième bord axial 18B de la couche de sommet 18 les uns sensiblement parallèlement aux autres. Chaque élément de renfort filaire de sommet 180 s'étend selon une direction principale D2 de chaque élément de renfort filaire de sommet 180. La direction D2 forme, avec la direction circonférentielle Z du pneumatique 10, un angle AT, en valeur absolue, allant de 20° à 65° de préférence de 26° à 55° et encore plus préférentiellement de 26° à 45°. Ici AT=-29°.

La couche de carcasse 34 est délimitée axialement par des premier et deuxième bords axiaux 34A, 34B de la couche de carcasse 34. La couche de carcasse 34 comprend des éléments de renfort filaires de carcasse 340 s'étendant axialement du premier bord axial 34A au deuxième bord axial 34B de la couche de carcasse 34. Chaque élément de renfort filaire de carcasse 340 s'étend selon une direction principale D3 de chaque élément de renfort filaire de carcasse 340 formant, avec la direction circonférentielle Z du pneumatique 10 un angle ACS, en valeur absolue, allant de 20° à 65° de préférence de 26° à 55° et encore plus préférentiellement de 26° à 45° dans une portion 34S de la couche de carcasse 34 s'étendant axialement à l'aplomb radial de la couche de sommet 18. Ici, ACS=+29°.

La portion 34S de la couche de carcasse 34 s'étendant axialement à l'aplomb de la couche de sommet 18 présente une largeur curviligne LS selon la direction axiale égale à au moins 30%, de préférence au moins 40% de la largeur curviligne selon la direction axiale LA de la couche de sommet 18 et égale à au plus 90%, de préférence au plus 80% de la largeur curviligne selon la direction axiale LA de la couche de sommet 18. Ici LS/LA=0,75. Le plan médian M du pneumatique 10 coupe cette portion 34S. Plus préférentiellement, cette portion 34S est centrée axialement sur le plan médian M du pneumatique 10.

La couche de carcasse 34 comprend une portion axialement intérieure 34I s'étendant depuis un premier point 35A de la couche de carcasse 34 radialement le plus intérieur au premier élément de renfort circonférentiel 26A jusqu'à un deuxième point 35B de la couche de carcasse 34 radialement le plus intérieur au deuxième élément de renfort circonférentiel 26B. La couche de carcasse 34 comprend également des première et deuxième portion axialement extérieure 34EA, 34EB, chaque première et deuxième portion axialement extérieure 34EA, 34EB étant agencée axialement à l'extérieur de la portion axialement intérieure 34I et s'étendant respectivement depuis chaque premier et deuxième point radialement les plus intérieurs 35A, 35B à chaque premier et deuxième élément de renfort circonférentiel 26A, 26B jusqu'à respectivement chaque premier et deuxième bords axial 34A, 34B de la couche de carcasse 34.

Les portions axialement intérieure 34I et axialement extérieures 34EA, 34EB sont agencées de façon à former des premier et deuxième enroulement 37A, 37B autour respectivement de chaque premier et deuxième élément de renfort circonférentiel 26A, 26B. La masse de gomme 30 de bourrage est intercalée axialement entre la portion axialement intérieure 34I et les première et deuxième portions axialement extérieure 34EA, 34EB.

La portion axialement intérieure 34I et la première portion axialement extérieure 34EA sont agencées de façon à former une première zone 39A de recouvrement de la couche de carcasse 34 comprenant une partie 34ITA de la portion axialement intérieure 34I et la première portion axialement extérieure 34EA agencées axialement en regard l'une de l'autre. La portion axialement intérieure 34I et la deuxième portion axialement extérieure 34EB sont agencées de façon à former une deuxième zone 39B de recouvrement de la couche de carcasse 34 comprenant une partie 34ITB de la portion axialement intérieure 34I et la deuxième portion axialement extérieure 34EB agencées axialement en regard l'une de l'autre.

Dans chaque partie 34ITA et 34ITB de la portion axialement intérieure 34I de chaque première et deuxième zone de recouvrement 39A, 39B et dans chaque première et deuxième portion axialement extérieure 34EA, 34EB de chaque première et deuxième zone de recouvrement 39A, 39B, la direction principale D3 de chaque élément de renfort filaire de carcasse 340, forme, avec la direction circonférentielle Z du pneumatique 10, un angle ACF1, en valeur absolue inférieur ou égal à 70°, de préférence à 65° et plus préférentiellement à 60° et supérieur ou égal à 25°, de préférence à 30°. En l'espèce, ACF1 varie de +52° à +47°. On notera que l'orientation de l'angle ACF1 dans chaque partie 34ITA, 34ITB est opposée à l'orientation de l'angle ACF1 dans chaque portion 39A, 39B.

La portion axialement intérieure 34I comprend des première et deuxième portions intercalées 34GA, 34GB respectivement entre la partie 34ITA, 34ITB de la portion axialement intérieure 34I de chaque première et deuxième zone recouvrement 39A, 39B, et la portion 34S de la couche de carcasse 34 s'étendant axialement à l'aplomb radial de la couche de sommet 18.

Dans chaque première et deuxième portion intercalée 34GA, 34GB, la direction principale D3 de chaque élément de renfort filaire de carcasse 340, forme, avec la direction circonférentielle Z du pneumatique 10, un angle ACF2, en valeur absolue, strictement supérieur à ACF1 et ACS. L'angle ACF2 est, en valeur absolue, inférieur ou égal à 80°, de préférence va, en valeur absolue, de 35° à 70° et plus préférentiellement de 40° à 60°. En l'espèce, l'angle ACF2 varie de +40° à +52°.

Chaque première et deuxième portion intercalée 34GA, 34GB s'étendant radialement dans chaque premier et deuxième flanc 22A, 22B présente une hauteur curviligne LF selon la direction radiale égale à au moins 5%, de préférence au moins 15% et plus préférentiellement au moins 30% de la hauteur curviligne LR selon la direction radiale de chaque partie 34L de la portion axialement interne 34I de la couche de carcasse 34 s'étendant depuis respectivement chaque première et deuxième extrémité axialement extérieure de la portion 34S de la couche de carcasse 34 s'étendant axialement à l'aplomb radial de la couche de sommet 18 jusqu'à respectivement chaque première et deuxième extrémité radialement extérieure de chaque première et deuxième zone de recouvrement 39A, 39B. Chaque première et deuxième portion intercalée 34GA, 34GB s'étendant radialement dans chaque premier et deuxième flanc 22A, 22B présente une hauteur curviligne LF selon la direction radiale égale à au plus 90%, de préférence au plus 80% de la hauteur curviligne LR selon la direction radiale de chaque partie 34L de la portion axialement interne 34I de la couche de carcasse 34. Ici, LF/LR=0,75.

Dans ce premier mode de réalisation, chaque premier et deuxième bord axial 34A, 34B de la couche de carcasse 34 est situé radialement à l'intérieur de l'équateur E du pneumatique 10 et, de préférence, situé radialement à l'intérieur de l'équateur E du pneumatique 10 à une distance radiale C1 de l'équateur E supérieure ou égale à 50% de la distance radiale E1 entre l'équateur E et le point le plus radialement intérieur du pneumatique 10. En l'espèce, E1=55 mm et C1=32 mm.

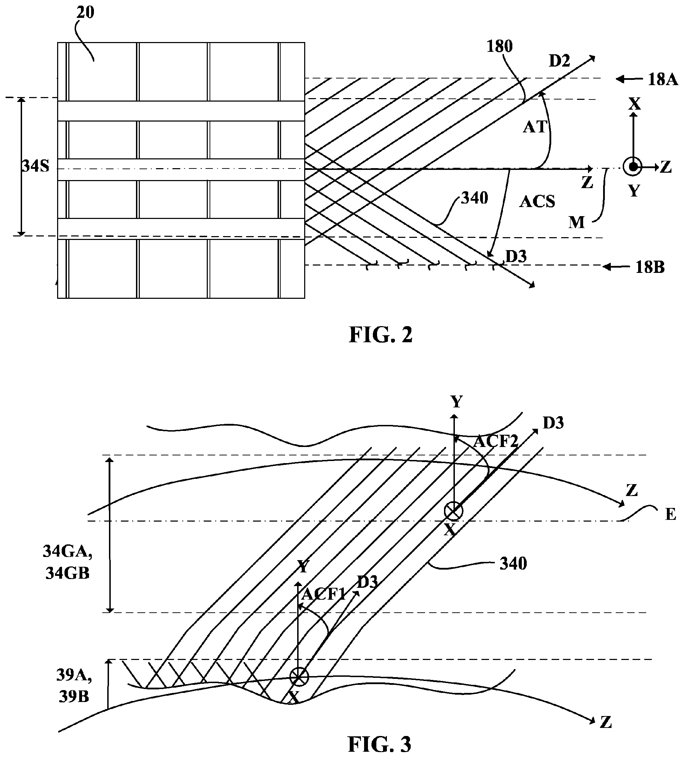

Comme illustré sur la figure 2, l'angle AT et l'angle ACS sont d'orientations opposées et tels que ||AT|-|ACS|| ≤ 5° pour tout couple de points des couches de sommet 18 et de carcasse 34 situés à la même distance axiale par rapport au plan médian M et appartenant au même plan de coupe méridien. Ici, pour tout couple de points des couches de sommet 18 et de carcasse 34 situés à la même distance axiale par rapport au plan médian M et appartenant au même plan de coupe méridien, ||AT|-|ACS|| = ||-29|-|+29||=|29-29|=0° ≤ 5°.

Les éléments de renfort filaires de sommet 180 et de carcasse 340 sont identiques. En l'espèce, chaque élément de renfort filaire de sommet 180 et de carcasse 340 comprend un assemblage de plusieurs monofilaments élémentaires textiles choisis parmi les monofilaments élémentaires de polyamide aliphatique, les monofilaments élémentaires de polyester ou les monofilaments élémentaires de dérivés cellulosiques et les assemblages de ces monofilaments élémentaires, de préférence choisis parmi les monofilaments élémentaires de polyamide aliphatique, les monofilaments élémentaires de polyester et les assemblages de ces monofilaments élémentaires. En l'espèce, chaque élément de renfort filaire de sommet 180 et de carcasse 340 est un assemblage de deux brins de polyéthylène téréphtalate de grade HMLS présentant chacun un titre égal à 144 tex et retordus individuellement à 420 tours/mètre dans un sens puis collectivement à 420 tours/mètre dans l'autre sens.

Le rapport de la densité d2 d'éléments de renfort filaires de sommet sur la densité d3 d'éléments de renfort filaires de carcasse est strictement supérieur à 1, de préférence va de 1,10 à 1,45 et plus préférentiellement de 1,25 à 1,35. Ici, d2/d3=1,29. En effet, la couche de sommet 18 présente une densité d2 d'éléments filaires de sommet 180 égale à 139 fils par décimètre de couche de sommet 18. La couche de carcasse 34 présente une densité d3 d'éléments filaires de carcasse 340 égale à 108 fils par décimètre de couche de carcasse 34.

La couche de sommet 18 présente une résistance à la rupture Rs supérieure ou égale à 1900 daN/dm, de préférence supérieure ou égale à 2300 daN/dm et inférieure ou égale à 2600 daN/dm. La couche de carcasse 34 présente une résistance à la rupture Rc supérieure ou égale à 1600 daN/mm, de préférence supérieure ou égale à 1800 daN/mm et inférieure ou égale à 2300 daN/mm, de préférence inférieure ou égale à 2100 daN/mm. En l'espèce, Rs=2475 daN/dm et Rc=1920 daN/dm. On notera que comme les éléments de renfort filaires de sommet 180 et de carcasse 340 sont identiques, les résistances mécaniques Rs et Rc vérifient également la condition selon laquelle le rapport de la résistance à la rupture Rs de la couche de sommet 18 sur la résistance à la rupture Rc de la couche de carcasse 34 est strictement supérieur à 1, de préférence va de 1,10 à 1,45 et plus préférentiellement de 1,25 à 1,35. Ici Rs/Rc=d2/d3=1,29.

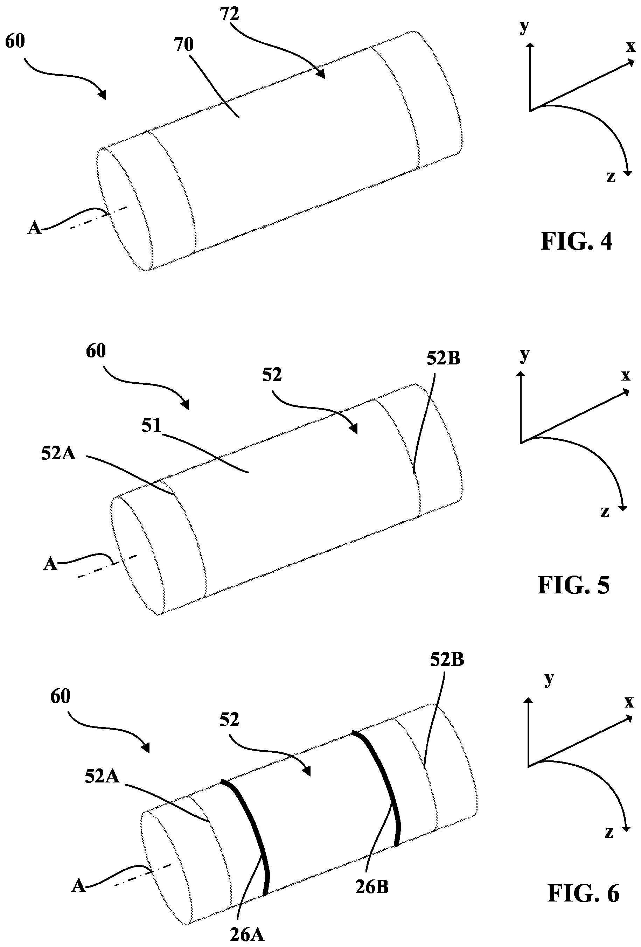

Le pneumatique 10 est obtenu par un procédé selon un premier mode de réalisation que l'on va décrire en référence aux figures 4 à 12.

Tout d'abord, on fabrique un ensemble de sommet enroulé 50 et un ensemble de carcasse enroulé 52 en agençant parallèlement les uns aux autres les éléments de renfort filaires 180 et 340 de chaque ensemble 50 et 52 et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments de renfort filaires sont parallèles les uns aux autres et sont parallèles à la direction principale de la nappe. Puis, si cela est nécessaire, on découpe des portions de chaque nappe droite selon un angle de découpe et on aboute ces portions les unes aux autres de façon à obtenir une nappe dite à angle, dans laquelle les éléments de renfort filaires de la nappe sont parallèles les uns aux autres et forment un angle avec la direction principale de la nappe égal à l'angle de découpe. En l'espèce, dans le premier mode de réalisation, on ne forme une nappe à angle que pour la nappe de sommet, la nappe de carcasse ne nécessitant avantageusement pas de découpe dans ce premier mode de réalisation.

Dans le mode de réalisation décrit, on obtient d'une part une unique nappe de sommet 49 et une unique nappe de carcasse 51 dont la largeur axiale de chacune, c'est-à-dire la dimension selon une direction perpendiculaire aux bords longitudinaux de chaque nappe, est égale à la largeur axiale respectivement de chaque ensemble de sommet enroulé 50 et de carcasse enroulé 52 qui seront formés ultérieurement.

En référence à la figure 4, dans une première étape d'assemblage d'une ébauche crue, on forme par enroulement d'une nappe d'étanchéité 70 autour d'un support 60 présentant une forme sensiblement cylindrique autour de son axe principal A, un ensemble d'étanchéité enroulé 72 destiné à former la couche d'étanchéité 16.

Puis, en référence à la figure 5, radialement à l'extérieur de l'ensemble d'étanchéité enroulé 72, on forme par enroulement de la nappe de carcasse 51 autour du support 60, l'ensemble de carcasse enroulé 52 destiné à former la couche de carcasse 34. L'ensemble de carcasse enroulé 52 est délimité axialement par des premier et deuxième bords axiaux 52A, 52B de l'ensemble de carcasse enroulé 52 et comprend les éléments de renfort filaires de carcasse 340 s'étendant sensiblement parallèlement les uns aux autres axialement du premier bord axial 52A au deuxième bord axial 52B de l'ensemble de carcasse enroulé 52. Chaque élément de renfort filaire de carcasse 340 s'étend, dans la nappe de carcasse 51, selon une direction principale K3 de chaque élément de renfort filaire de carcasse 340 dans la nappe de carcasse 51. La direction principale K3 forme, avec la direction circonférentielle z du support 60, un angle initial A3 de chaque élément de renfort filaire de carcasse 340, ici égal, en valeur absolue, à 52°.

En référence aux figures 6 à 8, ensuite, on agence les premier et deuxième éléments de renfort circonférentiels 26A, 26B autour de l'ensemble de carcasse enroulé 52 et on retourne axialement vers l'intérieur chaque premier et deuxième bord axial 52A, 52B de l'ensemble de carcasse enroulé 52 de façon à recouvrir radialement respectivement chaque premier et deuxième élément de renfort circonférentiel 26A, 26B par chaque premier et deuxième bord axial 52A, 52B de l'ensemble de carcasse enroulé 52 et à ce que l'ensemble de carcasse enroulé 52 soit enroulé autour de chaque premier et deuxième élément de renfort circonférentiel 26A, 26B.

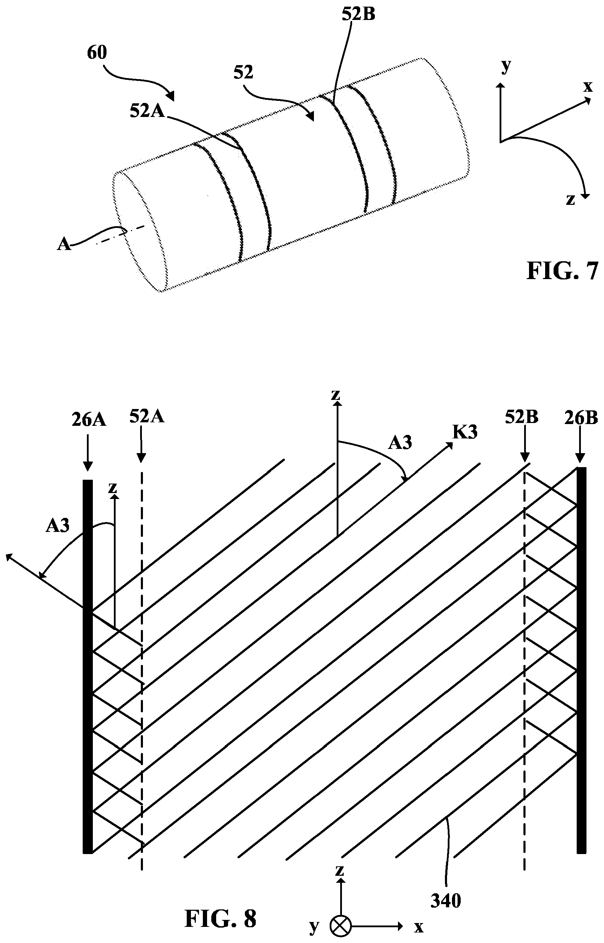

On a représenté sur la figure 8 un schéma illustrant l'agencement des éléments de renfort filaires 340 de carcasse à l'issue de l'étape de retournement axial des premier et deuxième bords axiaux 52A, 52B de l'ensemble de carcasse enroulé 52 autour des premier et deuxième éléments de renfort circonférentiel 26A, 26B.

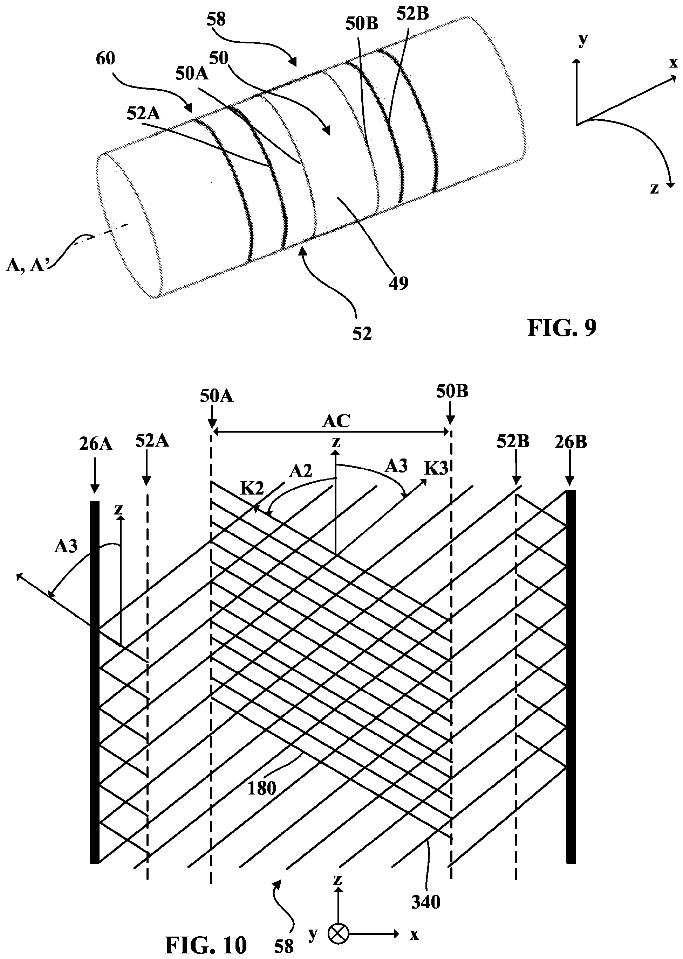

Puis, en référence aux figures 9 et 10, on forme par enroulement de la nappe de sommet 49, radialement à l'extérieur de l'ensemble de carcasse enroulé 52, l'ensemble de sommet enroulé 50 destiné à former la couche de sommet 18. L'ensemble de sommet enroulé 50 est délimité axialement par des premier et deuxième deux bords axiaux 50A, 50B de l'ensemble de sommet enroulé 50 et comprend les éléments de renfort filaires de sommet 180 s'étendant sensiblement parallèlement les uns aux autres axialement du premier bord axial 50A au deuxième bord axial 50B de l'ensemble de sommet enroulé 50. Chaque élément de renfort filaire de sommet 180 s'étend, dans la nappe de sommet 49, selon une direction principale K2 de chaque élément de renfort filaire de sommet 180 dans la nappe de sommet 49. En référence à la figure 10, la direction principale K2 forme, avec la direction circonférentielle z du support 60, un angle initial A2 de chaque élément de renfort filaire de sommet 180, ici égal, en valeur absolue, à 52°.

L'ensemble d'étanchéité enroulé 72, l'ensemble de carcasse enroulé 52 et l'ensemble de sommet enroulé 50 forment alors un assemblage 58 de forme sensiblement cylindrique autour d'un axe principal A' de l'assemblage sensiblement confondu avec l'axe principal A du support 60.

On a représenté sur la figure 10 un schéma analogue à celui de la figure 8 illustrant l'agencement des éléments de renfort filaires 340 de carcasse et des éléments de renfort filaires 180 de sommet à l'issue de l'étape de formation de l'ensemble de sommet enroulé 50. Sur cette figure 10, on a représenté les angles initiaux A2 et A3.

Dans une portion AC de l'assemblage 58 comprise axialement entre les bords axiaux 50A, 50B de l'ensemble de sommet enroulé 50, les angles initiaux A2 et A3 sont tels que ||A2|-|A3|| ≤ 5° et d'orientations opposées. En l'espèce, A2=-52° et A3=+52°.

Puis, on forme par enroulement d'une nappe de roulement ou de plusieurs nappes de roulement, radialement à l'extérieur de l'ensemble de sommet enroulé, un ensemble de roulement enroulé destiné à former la bande de roulement 20. On obtient alors une ébauche crue 11 du pneumatique destinée à être réticulée dans le moule de réticulation.

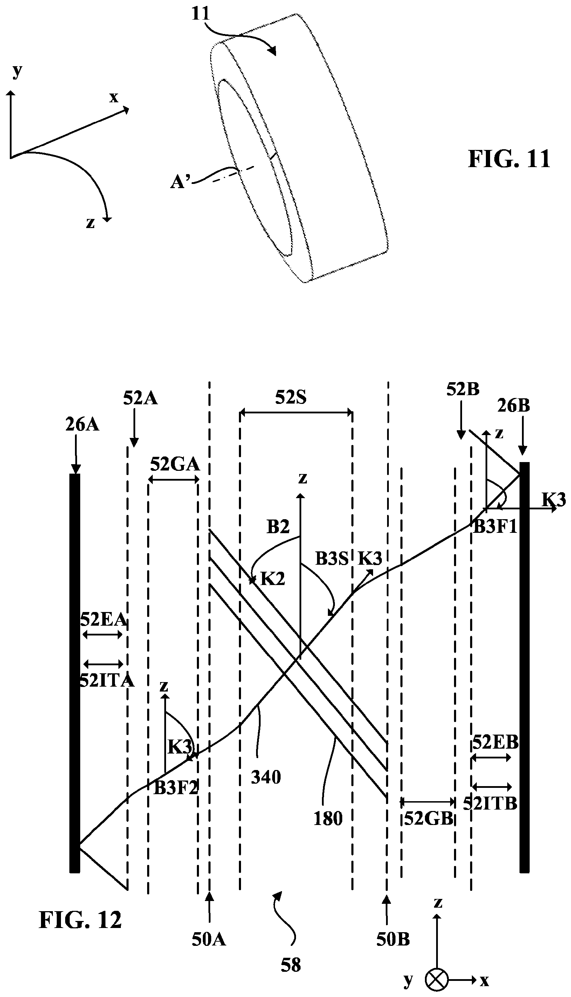

Ensuite, on transfert l'ébauche crue 11 comprenant l'assemblage 58 et formée à partir de cet assemblage 58 depuis le support 60 jusque dans un moule de réticulation comprenant une cavité interne (non représenté). Une fois dans le moule de réticulation, on déforme l'ébauche crue 11 et donc également l'assemblage 58 de forme sensiblement cylindrique de façon à obtenir l'ébauche crue 11 de forme sensiblement torique et donc l'assemblage 58 également de forme sensiblement torique autour de l'axe principal A' de l'assemblage 58. L'étape de déformation de l'ébauche 11 et donc de l'assemblage 58 est donc réalisée dans le moule de réticulation, par exemple par la mise sous pression d'une membrane à l'intérieur de l'ébauche crue 11. On obtient l'ébauche déformée 11 illustrée sur les figures 11 et 12.

En référence à la figure 12, on déforme l'assemblage 58 de forme sensiblement cylindrique autour de l'axe principal A' de l'assemblage 58 de façon à obtenir l'assemblage 58 de forme sensiblement torique autour de cet axe principal A' de sorte que, postérieurement à l'étape de déformation, la direction principale K3 de chaque élément de renfort filaire de carcasse 340 forme, avec la direction circonférentielle z de l'assemblage 58, un angle final B3S de chaque élément de renfort filaire de carcasse 340, en valeur absolue, égal à 29°, dans une portion 52S de l'ensemble de carcasse enroulé 52 s'étendant axialement à l'aplomb radial de l'ensemble de sommet enroulé 50. La portion 52S de l'ensemble de carcasse enroulé 52 est destinée à former la portion 34S de la couche de carcasse 34.

On déforme l'assemblage 58 de forme sensiblement cylindrique autour de l'axe principal A' de l'assemblage 58 de façon à obtenir l'assemblage 58 de forme sensiblement torique autour de cet axe principal A' également de sorte que, postérieurement à l'étape de déformation, la direction principale K3 de chaque élément de renfort filaire de carcasse 340 forme, avec la direction circonférentielle z de l'assemblage 58, un angle final B3F1 de chaque élément de renfort filaire de carcasse 340 variant de 47° à 52°, dans des portions et parties 52ITA, 52ITB, 52EA, 52EB destinées à former respectivement les parties et portions 34ITA, 34ITB, 34EA, 34EB de la portion axialement intérieure 34I de la couche de carcasse 34.

On déforme l'assemblage 58 de forme sensiblement cylindrique autour de l'axe principal A' de l'assemblage 58 de façon à obtenir l'assemblage 58 de forme sensiblement torique autour de cet axe principal A' également de sorte que, postérieurement à l'étape de déformation, la direction principale K3 de chaque élément de renfort filaire de carcasse 340 forme, avec la direction circonférentielle z de l'assemblage 58, un angle final B3F2 de chaque élément de renfort filaire de carcasse 340 sensiblement égal à l'angle ACF2 , ici égal à 52°, dans des portions 52GA, 52GB destinées à former respectivement les portions 34GA, 34GB de la portion axialement intérieure 34I de la couche de carcasse 34.

On déforme l'assemblage 58 de forme sensiblement cylindrique autour de l'axe principal A' de l'assemblage 58 de façon à obtenir l'assemblage 58 de forme sensiblement torique autour de cet axe principal A' également de sorte que, postérieurement à l'étape de déformation, la direction principale K2 de chaque élément de renfort filaire de sommet 180 forme, avec la direction circonférentielle z de l'assemblage 58, un angle final B2 de chaque élément de renfort filaire de sommet 180, en valeur absolue, égal à 29°.

Comme représenté sur la figure 12, les angles B2 et B3S sont tels ||B2|-|B3S|| ≤ 5° et d'orientations opposées. En l'espèce, B2=-29° et B3S=+29°.

Lors de l'étape de déformation, les angles B2, B3S et B3F1 varient en suivant une loi de variation connue de l'homme du métier, en fonction notamment des angles initiaux A2 et A3 ainsi que du taux de déformation, et comme cela est expliqué dans FR2797213 et dans FR1413102. Au contraire, l'angle B3F2 ne varie pas et est sensiblement égal à l'angle A3.

On va maintenant décrire une pneumatique et un procédé conforme à un deuxième mode de réalisation selon l'invention. Les éléments analogues à ceux du premier mode de réalisation sont désignés par des références identiques.

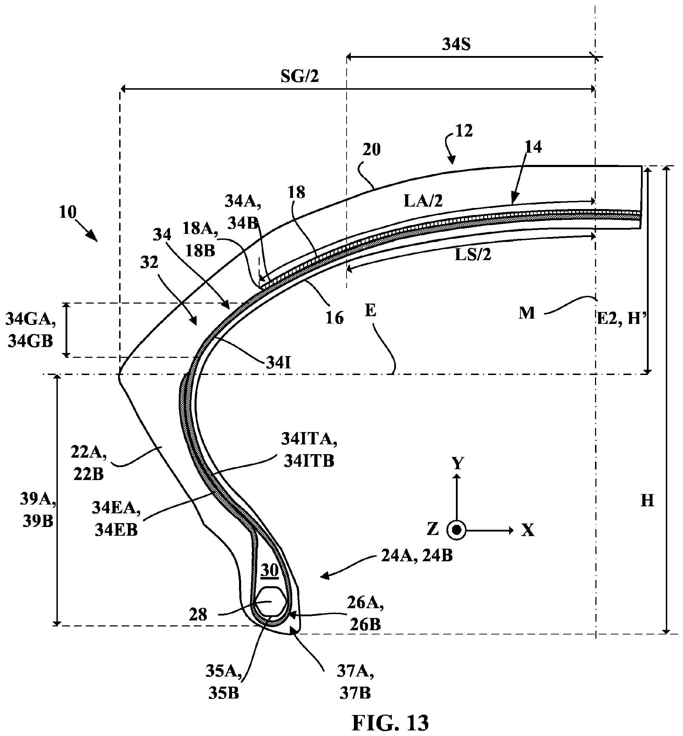

A la différence du pneumatique 10 selon le premier mode de réalisation et comme illustré sur la figure 13, chaque premier et deuxième bord axial 34A, 34B de la couche de carcasse 34 est situé radialement à l'extérieur de l'équateur E et ici situé radialement sur ou à l'extérieur de l'équateur E à une distance radiale C2 de l'équateur E inférieure ou égale à 50% de la distance radiale E2 entre l'équateur E et le point le plus radialement extérieur du pneumatique 10. En l'espèce, chaque premier et deuxième bord axial 34A, 34B de la couche de carcasse 34 est situé radialement sur l'équateur E du pneumatique 10. En l'espèce, E2=52 mm et C2=0 mm.

En outre, contrairement au premier mode de réalisation dans lequel tous les éléments de renfort filaires de sommet 180 et de carcasse 340 sont identiques, les éléments de renfort filaires de sommet 180 sont différents des éléments de renfort filaires de carcasse 340. Chaque élément de renfort filaire de la couche de sommet 180 comprend un assemblage de plusieurs monofilaments élémentaires textiles choisis parmi les monofilaments élémentaires de polyamide aromatique et les assemblages de ces monofilaments élémentaires de polyamide aromatique avec des monofilaments élémentaires textiles différents des monofilaments élémentaires textiles de polyamide aromatique. En l'espèce, chaque élément de renfort filaire de sommet 180 est un assemblage de deux brins de polyamide aromatique, par exemple de l'aramide, présentant chacun un titre égal à 167 tex et retordus individuellement à 290 tours/mètre dans un sens puis collectivement à 290 tours/mètre dans l'autre sens.

### TESTS COMPARATIFS

### Conservation de la dimension radiale attendue

On a testé la tenue de la dimension radiale un pneumatique 10 selon le premier mode de réalisation décrit ci-dessus ainsi que celle d'un pneumatique de type diagonal décrit précédemment lorsqu'ils sont soumis à une pression de gonflage nominale. On mesure l'écart entre le diamètre mesuré en l'absence de pression et le diamètre mesuré sous une pression nominale. Dans le cas du pneumatique 10 selon le premier mode de réalisation, on note un écart de 1 mm et dans le cas du pneumatique de type diagonal, on note un écart de 1 mm. Ces résultats démontrent ce qui a été expliqué précédemment à savoir un maintien de la dimension radiale du pneumatique en statique, comme lors de l'application de la pression de gonflage. Des tests dynamiques, c'est-à-dire avec l'application d'une vitesse de roulage, montrent que les deux pneumatiques présentent un écart comparable.

### Vitesse limite

La vitesse limite est déterminée en soumettant chaque pneumatique à une montée en vitesse progressive, selon des paliers déterminés, jusqu'à ce que le pneumatique soit détruit. La vitesse limite est la vitesse maximale atteinte avant destruction. Le pneumatique 10 selon le premier mode de réalisation présente une vitesse limite égale à 266 km/h alors qu'un pneumatique analogue de type diagonal de mêmes dimensions présente une vitesse limite égale à 226 km/h et qu'un pneumatique de type diagonal à ceinture de mêmes dimensions présente une vitesse limite égale à 234 km/h.

### Masse

La masse du pneumatique 10 selon le premier mode de réalisation est égale à 4,85 kg alors que la masse d'un pneumatique analogue de type diagonal de mêmes dimensions présente une masse égale à 5,30 kg et la masse d'un pneumatique de type diagonal à ceinture de mêmes dimensions présente une masse égale à 5,60 kg.

### Energie à rupture

On a testé la performance au test d'énergie à rupture du pneumatique 10 selon le premier mode de réalisation et d'un pneumatique de type diagonal de mêmes dimensions mais sans différenciation de la densité des éléments filaires de renfort de carcasse et de travail. Le test est mené conformément aux recommandations de la NHTSA (« National Highway Traffic Safety Administration ») indiquées dans le document intitulé « Evaluation of Laboratory Tire Tread and Sidewall Strength (Plunger Energy) Test Method ». Le pneumatique 10 selon le premier mode de réalisation présente une énergie à rupture égale à 44J et le pneumatique de type diagonal présente une énergie à rupture égale à 45J. Dans les deux cas, l'énergie à rupture est largement supérieure au seuil réglementaire requis de 34J.

L'invention, telle que définie aux revendications, ne se limite pas aux modes de réalisation décrits précédemment.

## Revendications

1. Pneumatique (10) pour motocyclette présentant un indice de vitesse inférieur ou égal à V et comprenant un sommet (12), des premier et deuxième flancs (22A, 22B), des premier et deuxième bourrelets (24A, 24B), chaque premier et deuxième flanc (22A, 22B) reliant respectivement chaque premier et un deuxième bourrelet (24A, 24B) au sommet (12), le pneumatique (10) comprenant une armature de carcasse (32) ancrée dans chaque premier et un deuxième bourrelet (24A, 24B) et s'étendant radialement dans chaque premier et deuxième flanc (22A, 22B) et axialement dans le sommet (12), l'armature de carcasse (32) comprenant une unique couche de carcasse (34), le sommet (12) comprenant :
- une bande de roulement (20) destinée à venir en contact avec un sol lors du roulage du pneumatique (10),
- une armature de sommet (14) agencée radialement entre la bande de roulement (20) et l'armature de carcasse (32), l'armature de sommet (14) comprenant une unique couche de sommet (18),
la couche de sommet (18) est délimitée axialement par des premier et deuxième bords axiaux (18A, 18B) de la couche de sommet (18) et comprend des éléments de renfort filaires de sommet (180) s'étendant axialement du premier bord axial (18A, 18B) au deuxième bord axial (18A, 18B) de la couche de sommet (18) les uns sensiblement parallèlement aux autres selon une direction principale (D2) de chaque élément de renfort filaire de sommet (180) formant, avec la direction circonférentielle (Z) du pneumatique (10), un angle AT,
la couche de carcasse (34) est délimitée axialement par des premier et deuxième bords axiaux (34A, 34B) de la couche de carcasse (34) et comprend des éléments de renfort filaires de carcasse (340) s'étendant axialement du premier bord axial (34A, 34B) au deuxième bord axial (34A, 34B) de la couche de carcasse (34), chaque élément de renfort filaire de carcasse (340) s'étendant selon une direction principale (D3) de chaque élément de renfort filaire de carcasse (340), formant, avec la direction circonférentielle (Z) du pneumatique (10), un angle ACS, dans une portion (34S) de la couche de carcasse (34) s'étendant axialement à l'aplomb radial de la couche de sommet (18),
l'angle AT et l'angle ACS étant d'orientations opposées et tels que ||AT|-|ACS|| ≤ 5°.

2. Pneumatique (10) selon la revendication précédente, dans lequel l'indice de vitesse est choisi parmi les indices V, H, U, T, S.

3. Pneumatique (10) selon la revendication précédente, dans lequel l'indice de vitesse est choisi parmi les indices S, R, Q, P.

4. Pneumatique (10) selon l'une quelconque des revendications précédentes, dans lequel chaque angle AT et ACS va, en valeur absolue de 20° à 65°, de préférence de 26° à 55° et encore plus préférentiellement de 26° à 45°.

5. Pneumatique (10) selon l'une quelconque des revendications précédentes, dans lequel chaque premier et deuxième bourrelet (24A, 24B) comprenant respectivement un premier et un deuxième élément de renfort circonférentiel (26), la couche de carcasse (34) comprend :
- une portion axialement intérieure (34I) s'étendant depuis un premier point (35A) de la couche de carcasse (34) radialement le plus intérieur au premier élément de renfort circonférentiel (26A) jusqu'à un deuxième point (35B) de la couche de carcasse (34) radialement le plus intérieur au deuxième élément de renfort circonférentiel (26B), et
- des première et deuxième portion axialement extérieure (34EA, 34EB), chaque première et deuxième portion axialement extérieure (34EA, 34EB) étant agencée axialement à l'extérieur de la portion axialement intérieure (34I) et s'étendant respectivement depuis chaque premier et deuxième point radialement les plus intérieurs (35A, 35B) à chaque premier et deuxième élément de renfort circonférentiel (26A, 26B) jusqu'à respectivement chaque premier et deuxième bords axial (34A, 34B) de la couche de carcasse (34),
la portion axialement intérieure (34I) et les première et deuxième portions axialement extérieures (34EA, 34EB) étant agencées de façon à former des premier et deuxième enroulement autour respectivement de chaque premier et deuxième élément de renfort circonférentiel (26).

6. Pneumatique selon la revendication précédente, dans lequel la portion axialement intérieure (34I) et les première et deuxième portions axialement extérieures (34EA, 34EB) sont agencées de façon à former :
- une première zone de recouvrement (39A) de la couche de carcasse (34) comprenant une partie (34ITA) de la portion axialement intérieure (341) et la première portion axialement extérieure (34EA) agencées axialement en regard l'une de l'autre, et
- une deuxième zone de recouvrement (39B) de la couche de carcasse (34) comprenant une partie (34ITB) de la portion axialement intérieure (341) et la deuxième portion axialement extérieure (34EB) agencées axialement en regard l'une de l'autre, et
la direction principale (D3) de chaque élément de renfort filaire de carcasse (340), forme, avec la direction circonférentielle (Z) du pneumatique (10), dans chaque partie (34ITA, 34ITB) de la portion axialement intérieure (34I) et chaque première et deuxième portion axialement extérieure (34EA, 34EB) de chaque première et deuxième zone de recouvrement (39A, 39B), un angle ACF1, en valeur absolue inférieur ou égal à 70°.

7. Pneumatique (10) selon la revendication précédente, dans lequel l'angle ACF1 est inférieur ou égal à 65°, de préférence inférieur ou égal à 60°.

8. Pneumatique (10) selon la revendication 6 ou 7, dans lequel l'angle ACF1 est supérieur ou égal à 25°, de préférence supérieur ou égal à 30°.

9. Pneumatique (10) selon l'une quelconque des revendications 6 à 8, dans lequel la portion axialement intérieure (34I) comprend des première et deuxième portions intercalées (34GA, 34GB) respectivement entre :
- la partie (34ITA, 34ITB) de la portion axialement intérieure (34I) de chaque première et deuxième zone recouvrement (39A, 39B), et
- la portion (34S) de la couche de carcasse (34) s'étendant axialement à l'aplomb radial de la couche de sommet (18),
la direction principale (D3) de chaque élément de renfort filaire de carcasse (340), formant, avec la direction circonférentielle (Z) du pneumatique (10), dans chaque première et deuxième portion intercalée, un angle ACF2, en valeur absolue, supérieur ou égal à ACF1 et strictement supérieur à ACS, de préférence strictement supérieur à ACF1 et ACS.

10. Pneumatique (10) selon la revendication précédente, dans lequel l'angle ACF2 est, en valeur absolue, inférieur ou égal à 80°, de préférence va, en valeur absolue, de 35° à 70° et plus préférentiellement de 40° à 60°.

11. Pneumatique (10) selon l'une quelconque des revendications 1 à 10, dans lequel chaque premier et deuxième bord axial (34A, 34B) de la couche de carcasse (34) est situé radialement à l'intérieur de l'équateur (E) du pneumatique (10) et, de préférence, situé radialement à l'intérieur de l'équateur (E) du pneumatique (10) à une distance radiale (C1) de l'équateur (E) supérieure ou égale à 50% de la distance radiale (E1) entre l'équateur (E) et le point le plus radialement intérieur du pneumatique (10).

12. Pneumatique (10) selon l'une quelconque des revendications 1 à 10, dans lequel chaque premier et deuxième bord axial de la couche de carcasse (34) est situé radialement sur ou à l'extérieur de l'équateur (E) du pneumatique (10) et de préférence situé radialement à l'extérieur de l'équateur (E) du pneumatique (10) à une distance radiale (C2) de l'équateur (E) inférieure ou égale à 50% de la distance radiale (E2) entre l'équateur (E) et le point le plus radialement extérieur du pneumatique (10).

13. Pneumatique (10) selon l'une quelconque des revendications précédentes, dans lequel le rapport de la résistance à la rupture de la couche de sommet (18) sur la résistance à la rupture de la couche de carcasse (34) est strictement supérieur à 1, de préférence va de 1,10 à 1,45 et plus préférentiellement de 1,25 à 1,35.

## Patentansprüche

1. Reifen (10) für ein Motorrad, welcher einen Geschwindigkeitsindex aufweist, der kleiner oder gleich V ist, und einen Scheitel (12), eine erste und eine zweite Seitenwand (22A, 22B) und einen ersten und einen zweiten Wulst (24A, 24B) umfasst, wobei die erste und die zweite Seitenwand (22A, 22B) den ersten bzw. zweiten Wulst (24A, 24B) mit dem Scheitel (12) verbinden, wobei der Reifen (10) eine Karkassenbewehrung (32) umfasst, die im ersten und im zweiten Wulst (24A, 24B) verankert ist und sich radial in der ersten und in der zweiten Seitenwand (22A, 22B) und axial im Scheitel (12) erstreckt, wobei die Karkassenbewehrung (32) eine einzige Karkassenlage (34) umfasst, wobei der Scheitel (12) umfasst:
- einen Laufstreifen (20), der dazu bestimmt ist, beim Rollen des Reifens (10) mit einem Boden in Kontakt zu gelangen,
- eine Scheitelbewehrung (14), die radial zwischen dem Laufstreifen (20) und der Karkassenbewehrung (32) angeordnet ist, wobei die Scheitelbewehrung (14) eine einzige Scheitellage (18) umfasst,
wobei die Scheitellage (18) axial von einem ersten und einem zweiten axialen Rand (18A, 18B) der Scheitellage (18) begrenzt wird und fadenförmige Festigkeitsträger (180) des Scheitels umfasst, die sich axial vom ersten axialen Rand (18A, 18B) zum zweiten axialen Rand (18A, 18B) der Scheitellage (18) im Wesentlichen parallel zueinander entlang einer Hauptrichtung (D2) jedes fadenförmigen Festigkeitsträgers (180) des Scheitels erstrecken, die mit der Umfangsrichtung (Z) des Reifens (10) einen Winkel AT bildet,
wobei die Karkassenlage (34) axial von einem ersten und einem zweiten axialen Rand (34A, 34B) der Karkassenlage (34) begrenzt wird und fadenförmige Festigkeitsträger (340) der Karkasse umfasst, die sich axial vom ersten axialen Rand (34A, 34B) zum zweiten axialen Rand (34A, 34B) der Karkassenlage (34) erstrecken, wobei sich jeder fadenförmige Festigkeitsträger (340) der Karkasse entlang einer Hauptrichtung (D3) jedes fadenförmigen Festigkeitsträgers (340) der Karkasse erstreckt, die mit der Umfangsrichtung (Z) des Reifens (10) einen Winkel ACS in einem Abschnitt (34S) der Karkassenlage (34) bildet, der sich axial zur radialen lotrechten Richtung der Scheitellage (18) erstreckt,
wobei der Winkel AT und der Winkel ACS entgegengesetzte Ausrichtungen aufweisen und so beschaffen sind, dass ||AT|-|ACS|| ≤ 5° ist.

2. Reifen (10) nach dem vorhergehenden Anspruch, wobei der Geschwindigkeitsindex aus den Indizes V, H, U, T, S ausgewählt ist.

3. Reifen (10) nach dem vorhergehenden Anspruch, wobei der Geschwindigkeitsindex aus den Indizes S, R, Q, P ausgewählt ist.

4. Reifen (10) nach einem der vorhergehenden Ansprüche, wobei jeder Winkel AT und ACS dem absoluten Betrag nach 20° bis 65°, vorzugsweise 26° bis 55° und noch stärker bevorzugt 26° bis 45° beträgt.

5. Reifen (10) nach einem der vorhergehenden Ansprüche, wobei der erste und der zweite Wulst (24A, 24B) einen ersten bzw. einen zweiten umlaufenden Festigkeitsträger (26) umfassen, wobei die Karkassenlage (34) umfasst:
- einen axial inneren Abschnitt (34I), der sich von einem ersten radial innersten Punkt (35A) der Karkassenlage (34) am ersten umlaufenden Festigkeitsträger (26A) bis zu einem zweiten radial innersten Punkt (35B) der Karkassenlage (34) am zweiten umlaufenden Festigkeitsträger (26B) erstreckt, und
- einen ersten und einen zweiten axial äußeren Abschnitt (34EA, 34EB), wobei der erste und der zweite axial äußere Abschnitt (34EA, 34EB) jeweils axial außerhalb des axial inneren Abschnitts (34I) angeordnet sind und sich vom ersten bzw. zweiten radial innersten Punkt (35A, 35B) am ersten bzw. zweiten umlaufenden Festigkeitsträger (26A, 26B) bis zum ersten bzw. zweiten axialen Rand (34A, 34B) der Karkassenlage (34) erstrecken,
wobei der axial innere Abschnitt (34I) und der erste und zweite axial äußere Abschnitt (34EA, 34EB) so angeordnet sind, dass sie einen ersten bzw. zweiten Umschlag um den ersten bzw. zweiten umlaufenden Festigkeitsträger (26) bilden.

6. Reifen nach dem vorhergehenden Anspruch, wobei der axial innere Abschnitt (34I) und der erste und zweite axial äußere Abschnitt (34EA, 34EB) so angeordnet sind, dass sie bilden:
- einen ersten Überdeckungsbereich (39A) der Karkassenlage (34), der einen Teil (34ITA) des axial inneren Abschnitts (34I) und den ersten axial äußeren Abschnitt (34EA) umfasst, die einander axial gegenüberliegend angeordnet sind, und
- einen zweiten Überdeckungsbereich (39B) der Karkassenlage (34), der einen Teil (34ITB) des axial inneren Abschnitts (34I) und den zweiten axial äußeren Abschnitt (34EB) umfasst, die einander axial gegenüberliegend angeordnet sind, und
wobei die Hauptrichtung (D3) jedes fadenförmigen Festigkeitsträgers (340) der Karkasse mit der Umfangsrichtung (Z) des Reifens (10) in jedem Teil (34ITA, 34ITB) des axial inneren Abschnitts (34I) und im ersten und zweiten axial äußeren Abschnitt (34EA, 34EB) des ersten bzw. zweiten Überdeckungsbereichs (39A, 39B) jeweils einen Winkel ACF1 bildet, dessen absoluter Betrag kleiner oder gleich 70° ist.

7. Reifen (10) nach dem vorhergehenden Anspruch, wobei der Winkel ACF1 kleiner oder gleich 65°, vorzugsweise kleiner oder gleich 60° ist.

8. Reifen (10) nach Anspruch 6 oder 7, wobei der Winkel ACF1 größer oder gleich 25°, vorzugsweise größer oder gleich 30° ist.

9. Reifen (10) nach einem der Ansprüche 6 bis 8, wobei der axial innere Abschnitt (34I) einen ersten und einen zweiten dazwischenliegenden Abschnitt (34GA, 34GB) umfasst, zwischen:
- dem Teil (34ITA, 34ITB) des axial inneren Abschnitts (34I) des ersten bzw. zweiten Überdeckungsbereichs (39A, 39B) und
- dem Abschnitt (34S) der Karkassenlage (34), der sich axial zur radialen lotrechten Richtung der Scheitellage (18) erstreckt,
wobei die Hauptrichtung (D3) jedes fadenförmigen Festigkeitsträgers (340) der Karkasse mit der Umfangsrichtung (Z) des Reifens (10) im ersten und im zweiten dazwischenliegenden Abschnitt jeweils einen Winkel ACF2 bildet, dessen absoluter Betrag größer oder gleich ACF1 und streng größer als ACS, vorzugsweise streng größer als ACF1 und ACS ist.

10. Reifen (10) nach dem vorhergehenden Anspruch, wobei der Winkel ACF2 dem absoluten Betrag nach kleiner oder gleich 80° ist, vorzugsweise 35° bis 70° und stärker bevorzugt 40° bis 60° beträgt.

11. Reifen (10) nach einem der Ansprüche 1 bis 10, wobei der erste und der zweite axiale Rand (34A, 34B) der Karkassenlage (34) sich jeweils radial innerhalb Äquators (E) des Reifens (10) befinden und sich vorzugsweise radial innerhalb des Äquators (E) des Reifens (10) in einem radialen Abstand (C1) vom Äquator (E) befinden, der größer oder gleich 50 % des radialen Abstands (E1) zwischen dem Äquator (E) und dem radial innersten Punkt des Reifens (10) ist.

12. Reifen (10) nach einem der Ansprüche 1 bis 10, wobei der erste und der zweite axiale Rand der Karkassenlage (34) sich jeweils radial auf dem oder außerhalb des Äquators (E) des Reifens (10) befinden und sich vorzugsweise radial außerhalb des Äquators (E) des Reifens (10) in einem radialen Abstand (C2) vom Äquator (E) befinden, der kleiner oder gleich 50 % des radialen Abstands (E2) zwischen dem Äquator (E) und dem radial äußersten Punkt des Reifens (10) ist.

13. Reifen (10) nach einem der vorhergehenden Ansprüche, wobei das Verhältnis der Bruchfestigkeit der Scheitellage (18) zur Bruchfestigkeit der Karkassenlage (34) streng größer als 1 ist, vorzugsweise 1,10 bis 1,45 und stärker bevorzugt 1,25 bis 1,35 beträgt.

## Claims

1. Motorcycle tyre (10) having a speed rating less than or equal to V and comprising a crown (12), first and second sidewalls (22A, 22B) and first and second beads (24A, 24B), each first and second sidewall (22A, 22B) respectively connecting each first and second bead (24A, 24B) to the crown (12), the tyre (10) comprising a carcass reinforcement (32) anchored in each first and second bead (24A, 24B) and extending radially in each first and second sidewall (22A, 22B) and axially in the crown (12), the carcass reinforcement (32) comprising a single carcass layer (34), the crown (12) comprising:
- a tread (20) intended to come into contact with the ground when the tyre (10) is running,
- a crown reinforcement (14) arranged radially between the tread (20) and the carcass reinforcement (32), the crown reinforcement (14) comprising a single crown layer (18),
the crown layer (18) is axially delimited by first and second axial edges (18A, 18B) of the crown layer (18) and comprises filamentary crown reinforcing elements (180) extending axially from the first axial edge (18A, 18B) to the second axial edge (18A, 18B) of the crown layer (18) substantially parallel to one another in a main direction (D2) of each filamentary crown reinforcing element (180) that forms an angle AT with the circumferential direction (Z) of the tyre (10), the carcass layer (34) is axially delimited by first and second axial edges (34A, 34B) of the carcass layer (34) and comprises filamentary carcass reinforcing elements (340) extending axially from the first axial edge (34A, 34B) to the second axial edge (34A, 34B) of the carcass layer (34), each filamentary carcass reinforcing element (340) extending in a main direction (D3) of each filamentary carcass reinforcing element (340) that forms an angle ACS with the circumferential direction (Z) of the tyre (10), in a portion (34S) of the carcass layer (34) that extends axially in radial line with the crown layer (18),
the angle AT and the angle ACS having opposite orientations and being such that ||AT|-|ACS|| ≤ 5°.

2. Tyre (10) according to the preceding claim, wherein the speed rating is selected from the ratings V, H, U, T, S.

3. Tyre (10) according to the preceding claim, wherein the speed rating is selected from the ratings S, R, Q, P.

4. Tyre (10) according to any one of the preceding claims, wherein each angle AT and ACS ranges, in absolute value, from 20° to 65°, preferably from 26° to 55° and more preferably still from 26° to 45°.

5. Tyre (10) according to any one of the preceding claims, wherein each first and second bead (24A, 24B) respectively comprises a first and a second circumferential reinforcing element (26), and the carcass layer (34) comprises:
- an axially inner portion (34I) extending from a first point (35A) of the carcass layer (34) that is radially furthest on the inside of the first circumferential reinforcing element (26A) to a second point (35B) of the carcass layer (34) that is radially furthest on the inside of the second circumferential reinforcing element (26B), and
- first and second axially outer portions (34EA, 34EB), each first and second axially outer portion (34EA, 34EB) being arranged axially on the outside of the axially inner portion (341) and extending respectively from each first and second point (35A, 35B) radially furthest on the inside of each first and second circumferential reinforcing element (26A, 26B) as far as, respectively, each first and second axial edge (34A, 34B) of the carcass layer (34),
the axially inner portion (34I) and the first and second axially outer portions (34EA, 34EB) being arranged in such a way as to form first and second turn-ups around, respectively, each first and second circumferential reinforcing element (26).

6. Tyre according to the preceding claim, wherein the axially inner portion (34I) and the first and second axially outer portions (34EA, 34EB) are arranged in such a way as to form:
- a first region of overlap (39A) of the carcass layer (34) comprising a part (34ITA) of the axially inner portion (34I) and the first axially outer portion (34EA) arranged axially facing one another, and
- a second region of overlap (39B) of the carcass layer (34) comprising a part (34ITB) of the axially inner portion (34I) and the second axially outer portion (34EB) arranged axially facing one another, and
the main direction (D3) of each filamentary carcass reinforcing element (340) forms an angle ACF1 which, in absolute value, is less than or equal to 70° with the circumferential direction (Z) of the tyre (10), in each part (34ITA, 34ITB) of the axially inner portion (34I) and each first and second axially outer portion (34EA, 34EB) of each first and second region of overlap (39A, 39B).

7. Tyre (10) according to the preceding claim, wherein the angle ACF1 is less than or equal to 65°, preferably less than or equal to 60°.

8. Tyre (10) according to Claim 6 or 7, wherein the angle ACF1 is greater than or equal to 25°, preferably greater than or equal to 30°.

9. Tyre (10) according to any one of Claims 6 to 8, wherein the axially inner portion (34I) comprises first and second interleaved portions (34GA, 34GB) interleaved respectively between:
- the part (34ITA, 34ITB) of the axially inner portion (34I) of each first and second region of overlap (39A, 39B), and
- the portion (34S) of the carcass layer (34) that extends axially in radial line with the crown layer (18),
the main direction (D3) of each filamentary carcass reinforcing element (340) forming an angle ACF2 which, in absolute value, is greater than or equal to ACF1 and strictly greater than ACS, preferably strictly greater than ACF1 and ACS, with the circumferential direction (Z) of the tyre (10), in each first and second interleaved portion.

10. Tyre (10) according to the preceding claim, wherein the angle ACF2 is, in absolute value, less than or equal to 80°, and preferably ranges, in absolute value, from 35° to 70° and more preferably from 40° to 60°.

11. Tyre (10) according to any one of Claims 1 to 10, wherein each first and second axial edge (34A, 34B) of the carcass layer (34) is situated radially on the inside of the equator (E) of the tyre (10) and, preferably, situated radially on the inside of the equator (E) of the tyre (10) at a radial distance (C1) from the equator (E) that is greater than or equal to 50% of the radial distance (E1) between the equator (E) and the radially innermost point of the tyre (10).

12. Tyre (10) according to any one of Claims 1 to 10, wherein each first and second axial edge of the carcass layer (34) is situated radially on the outside of the equator (E) of the tyre (10) and, preferably, situated radially on the outside of the equator (E) of the tyre (10) at a radial distance (C2) from the equator (E) that is less than or equal to 50% of the radial distance (E2) between the equator (E) and the radially outermost point of the tyre (10).

13. Tyre (10) according to any one of the preceding claims, wherein the ratio of the breaking strength of the crown layer (18) to the breaking strength of the carcass layer (34) is strictly greater than 1, preferably ranges from 1.10 to 1.45 and more preferably from 1.25 to 1.35.
